# EUROPÄISCHE PATENTSCHRIFT

(11) **EP 1 636 137 B1**
(45) Veröffentlichungstag und Bekanntmachung des Hinweises auf die Patenterteilung: **25.10.2006**
(21) Anmeldenummer: 04739694.0
(22) Anmeldetag: 08.06.2004
(51) Int. Cl.: C02F 1/00

(54) **VERWENDUNG WÄSSRIGER DISPERSIONEN, ENTHALTEND ETHYLENCOPOLYMERWACHSE**
USE OF AQUEOUS DISPERSIONS CONTAINING ETHYLENE COPOLYMER WAX
UTILISATION DE DISPERSIONS AQUEUSES CONTENANT DES CIRES DE COPOLYMERE D'ETHYLENE

(30) Priorität: 11.06.2003 DE 10326630
(43) Veröffentlichungstag der Anmeldung: 22.03.2006
(73) Patentinhaber: BASF Aktiengesellschaft, 67056 Ludwigshafen (DE)
(72) Erfinder: FECHTENKÖTTER, Andreas, 67063 Ludwigshafen (DE); DECKERS, Andreas, 55234 Flomborn (DE); EHLE, Michael, 67071 Ludwigshafen (DE); GAST, Siegfried, 67071 Ludwigshafen (DE); KASEL, Wolfgang, 69226 Nussloch (DE); MÄHLING, Frank-Olaf, 68165 Mannheim (DE); WEBER, Wilhelm, 67435 Neustadt (DE); SCHNEIDER, Walter, 67067 Ludwigshafen (DE)
(86) Internationale Anmeldenummer: PCT/EP2004/006165
(87) Internationale Veröffentlichungsnummer: WO 2004/108601

(56) Entgegenhaltungen:
- EP-A- 0 354 521
- GB-A- 1 113 409

## Beschreibung

Die vorliegende Erfindung betrifft die Verwendung von wässrigen Dispersionen, enthaltend mindestens ein zumindest partiell neutralisiertes Ethylencopolymerwachs, gewählt aus solchen Ethylencopolymerwachsen, die als Comonomere einpolymerisiert enthalten
(A) 26,1 bis 39 Gew.-% mindestens einer ethylenisch ungesättigten Carbonsäure und
(B) 61 bis 73,9 Gew.-% Ethylen,
und solchen Ethylencopolymerwachsen, die einpolymerisiert enthalten
(A') (A') 20,5 bis 38,9 Gew.-% mindestens einer ethylenisch ungesättigten Carbonsäure,
(B') 79,4 bis 60 Gew.-% Ethylen und
(C') 0,1 bis 15 Gew.-% mindestens eines ethylenisch ungesättigten Carbonsäureesters,
als Hilfsmittel für die Abwasseraufbereitung.

Bei der Abwasseraufarbeitung besteht ein wichtiger Schritt darin, Feststoffe aus einer fein dispersen Phase in eine gut abtrennbare Modifikation ("Flocken") zu überführen. Zur Unterstützung der sogenannten Flockung setzt man dabei im Allgemeinen Flockungsmittel ein. Eine wichtige Klasse von Flockungsmitteln sind anorganische Salze, wie beispielsweise Aluminiumsalze oder Eisensalze, die jedoch ihrerseits zur Bildung von kolloidalen Niederschlägen Anlass geben können. Beispiele für eine andere Klasse von Flockungsmitteln sind organische Polymere wie beispielsweise hydrolytisch gespaltene Stärke. Einen Überblick findet man beispielsweise in *Ullmann's Encyclopedia of Industrial Chemistry,* 5. Auflage, Stichwort "Flocculants", Bd. A11, S. 251, Verlag Chemie Weinheim (**1988**).

Während man Flockungsmittel, die aus anorganischen Salzen bestehen, hauptsächlich in Substanz, d.h. in kristalliner Form, einsetzen kann, setzt man Flockungsmittel, die organische Polymere enthalten, überwiegend in Form ihrer wässrigen Dispersionen ein.

Aus wirtschaftlichen Gründen ist man bestrebt, Flockungsmittel zu entwickeln, die besonders gut wirken. Dabei spielen Fähigkeiten wie beispielsweise die Geschwindigkeit der Flockenbildung, Stabilität der Flocken, Vollständigkeit der Flockung und Restwassergehalt der Flockung eine Rolle. Weiterhin sollten Flockungsmittel eine befriedigende Lagerstabilität aufweisen und leicht applizierbar sein.

Aus JP 50-14150 ist bekannt, dass man wässrige Lösungen von Ethylen-AcrylsäureCopolymer mit einem Acrylsäuregehalt von 9,3 mol% einsetzen kann, um Mn²⁺, Hg²⁺ und Cd²⁺ aus wässrigen Lösungen auszufällen.

Es bestand die Aufgabe, neue Flockungsmittel bereit zu stellen, die ein verbessertes Anwendungsprofil aufweisen.

Demgemäß wurde gefunden, dass sich die eingangs definierte wässrigen Dispersionen sehr gut als Hilfsmittel für die Abwasseraufbereitung einsetzen lassen. Weiterhin wurde ein Verfahren zur Herstellung der eingangs definierten wässrigen Dispersionen gefunden. Weiterhin wurde ein Verfahren zur Abwasseraufbereitung gefunden. Weiterhin wurden die eingangs definierten Dispersionen gefunden.

Unter Abwasser werden im Folgenden nicht nur kommunale Abwässer verstanden, sondern verschmutztes Wasser, welches aus beispielsweise industriellen Betrieben, Bergwerken, Papiermaschinen, Baustoffherstellungsbetrieben oder Metallverarbeitung stammt. Abwässer im Sinne der vorliegenden Erfindung enthalten beispielsweise organische Materialien in gelöster oder kolloidal gelöster Form oder anorganische Salze. Abwasser im Sinne der vorliegenden Erfindung kann bereits einem oder mehreren Vorbehandlungsschritten unterworfen worden sein. So kann Abwasser im Sinne der vorliegenden Erfindung bereits durch beispielsweise einen Rechen von groben Abfallpartikeln befreit worden sein.

Unter Aufarbeitung wird im Folgenden die Entfernung zumindest eines Teils der in Abwässern vorhandenen organischen Materialien in gelöster oder kolloidal gelöster Form oder der anorganischen Salze verstanden. Vorzugsweise wird unter Aufarbeitung im Folgenden die Ausflockung zumindest eines Teils der in Abwässern vorhandenen organischen Materialien in gelöster oder kolloidal gelöster Form oder der anorganischen Salze verstanden.

Erfindungsgemäß verwendete Ethylencopolymerwachse werden ausgewählt aus solchen Ethylencopolymerwachsen, die als Comonomere einpolymerisiert enthalten
(A) 26,1 bis 39 Gew.-%, bevorzugt 26,3 bis 35 Gew.-%, besonders bevorzugt 26,5 bis 38,9 Gew.-% mindestens einer ethylenisch ungesättigten Carbonsäure und
(B) 61 bis 73,9 Gew.-%, bevorzugt 65 bis 73,7, besonders bevorzugt 70 bis 73,5 Gew.-% Ethylen,
und solchen Ethylencopolymerwachsen, die einpolymerisiert enthalten
(A') 20,5 bis 38,9 Gew.-%, bevorzugt 21 bis 28 Gew.-% mindestens einer ethylenisch ungesättigten Carbonsäure,
(B') 60 bis 79,4 Gew.-%, bevorzugt 70 bis 78,5 Gew.-% Ethylen und
(C') 0,1 bis 15 Gew.-%, bevorzugt 0,5 bis 10 Gew.-% mindestens eines ethylenisch ungesättigten Carbonsäureesters.

Unter einpolymerisiert enthaltenen Comonomeren werden dabei die Anteile an Comonomer verstanden, die molekular in die erfindungsgemäß verwendeten Ethylencopolymerwachse eingebaut werden.

Vorzugsweise wird als ethylenisch ungesättigte Carbonsäure (A) bzw. (A') mindestens eine Carbonsäure der allgemeinen Formel I gewählt, 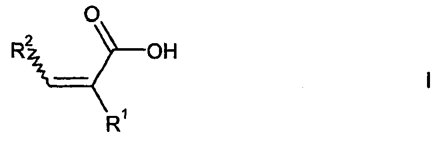 in der die Variablen wie folgt definiert sind:
R¹ und R² sind gleich oder verschieden.
R¹ wird gewählt aus Wasserstoff und
unverzweigtem und verzweigtem C₁-C₁₀-Alkyl, wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl, insbesondere Methyl;
R² wird gewählt aus unverzweigten und verzweigten C₁-C₁₀-Alkyl wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁₋C₄-Alkyl wie Methyl, Ethyl, n-Propyl, iso-Propyl, n-Butyl, iso-Butyl, sec.-Butyl und tert.-Butyl, insbesondere Methyl;
und ganz besonders bevorzugt Wasserstoff.

In einer Ausführungsform der vorliegenden Erfindung bedeutet R¹ Wasserstoff oder Methyl. Ganz besonders bevorzugt bedeutet R¹ Methyl.

In einer Ausführungsform der vorliegenden Erfindung bedeuten R¹ Wasserstoff oder Methyl und R² Wasserstoff.

Ganz besonders bevorzugt wird als ethylenisch ungesättigte Carbonsäure der allgemeinen Formel I Methacrylsäure eingesetzt.

Wünscht man mehrere ethylenisch ungesättigte Carbonsäuren zur Herstellung der in den erfindungsgemäß verwendeten Dispersionen eingesetzten Ethylencopolymerwachse zu verwenden, so kann man zwei verschiedene ethylenisch ungesättigte Carbonsäuren der allgemeinen Formel I einsetzen wie beispielsweise Acrylsäure und Methacrylsäure.

In einer Ausführungsform der vorliegenden Erfindung setzt man zur Herstellung der in den erfindungsgemäß verwendeten Dispersionen eingesetzten Ethylencopolymerwachse als ethylenisch ungesättigte Carbonsäure (Meth)acrylsäure und Maleinsäure ein.

In einer Ausführungsform der vorliegenden Erfindung setzt man zur Herstellung der in den erfindungsgemäß verwendeten Dispersionen eingesetzten Ethylencopolymerwachse nur eine ethylenisch ungesättigte Carbonsäure ein, insbesondere Acrylsäure oder Methacrylsäure.

In einer Ausführungsform der vorliegenden Erfindung wählt man solche Ethylencopolymerwachse, die einpolymerisiert enthalten
(A') 20,5 bis 38,9 Gew.-%, bevorzugt 21 bis 28 Gew.-% mindestens einer ethylenisch ungesättigten Carbonsäure,
(B') 60 bis 79,4 Gew.-%, bevorzugt 70 bis 78,5 Gew.-% Ethylen und
(C') 0,1 bis 15 Gew.-%, bevorzugt 0,5 bis 10 Gew.-% mindestens eines ethylenisch ungesättigten Carbonsäureesters.

Unter ethylenisch ungesättigten Carbonsäuren werden dabei die gleichen ethylenisch ungesättigten Carbonsäuren verstanden wie oben beschrieben.

Vorzugsweise entspricht mindestens ein ethylenisch ungesättigten Carbonsäureester einem Carbonsäureester der allgemeinen Formel II, 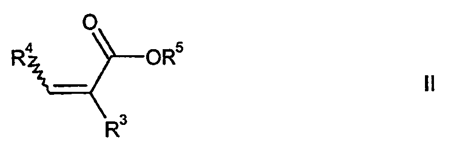 in dem die Variablen wie folgt definiert sind:
R³ und R⁴ sind gleich oder verschieden.
R³ wird gewählt aus Wasserstoff und
unverzweigtem und verzweigtem C₁-C₁₀-Alkyl, wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁-C₄-Alkyl wie Methyl, Ethyl, n-Propyl, iso-Propyl, n-Butyl, iso-Butyl, sec.-Butyl und tert.-Butyl, insbesondere Methyl;
R⁴ wird gewählt aus unverzweigten und verzweigten C₁-C₁₀-Alkyl wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁₋C₄-Alkyl wie Methyl, Ethyl, n-Propyl, iso-Propyl, n-Butyl, iso-Butyl, sec.-Butyl und tert.-Butyl, insbesondere Methyl;
und ganz besonders bevorzugt Wasserstoff.
R⁵ wird gewählt aus unverzweigten und verzweigten C₁-C₁₀-Alkyl wie beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl; besonders bevorzugt C₁₋C₄-Alkyl wie Methyl, Ethyl, n-Propyl, iso-Propyl, n-Butyl, iso-Butyl, sec.-Butyl und tert.-Butyl, insbesondere Methyl;
C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl.

In einer Ausführungsform der vorliegenden Erfindung bedeutet R³ Wasserstoff oder Methyl. Ganz besonders bevorzugt bedeutet R³ Wasserstoff.

In einer Ausführungsform der vorliegenden Erfindung bedeuten R³ und R⁴ Wasserstoff.

Ganz besonders bevorzugt ist R⁵ Methyl.

Ganz besonders bevorzugt wird als ethylenisch ungesättigter Carbonsäureester der allgemeinen Formel II Acrylsäuremethylester eingesetzt.

Wünscht man mehrere ethylenisch ungesättigte Carbonsäureester zur Herstellung der in den erfindungsgemäß verwendeten Dispersionen eingesetzten Ethylencopolymerwachse zu verwenden, so kann man beispielsweise zwei verschiedene ethylenisch ungesättigte Carbonsäureester der allgemeinen Formel II einsetzen wie beispielsweise Acrylsäuremethylester und Methacrylsäuremethylester.

In einer Ausführungsform der vorliegenden Erfindung setzt man zur Herstellung der in den erfindungsgemäß verwendeten Dispersionen eingesetzten Ethylencopolymerwachse als ethylenisch ungesättigte Carbonsäureester (Meth)acrylsäuremethylester ein.

In einer Ausführungsform der vorliegenden Erfindung setzt man zur Herstellung der in erfindungsgemäß verwendeten Dispersionen eingesetzten Ethylencopolymerwachse nur einen ethylenisch ungesättigten Carbonsäureester und nur eine ethylenisch ungesättigte Carbonsäure ein, insbesondere Acrylsäure oder Methacrylsäure und (Meth)acrylsäuremethylester.

In einer Ausführungsform der vorliegenden Erfindung können zur Herstellung der in erfindungsgemäß verwendeten Dispersionen eingesetzten Ethylencopolymerwachse bis zu 0,5 Gewichtsteile, bezogen auf die Summe der oben beschriebenen Comonomere, weitere Comonomere einpolymerisiert werden.

In einer Ausführungsform der vorliegenden Erfindung werden zur Herstellung der in erfindungsgemäß verwendeten Dispersionen eingesetzten Ethylencopolymerwachse keine weiteren Comonomere einpolymerisiert.

In einer Ausführungsform der vorliegenden Erfindung weisen in den erfindungsgemäß verwendeten Dispersionen eingesetzte Ethylencopolymerwachse eine Schmelzemassefließrate (MFR) im Bereich von 1 bis 50 g/10 min, bevorzugt 5 bis 20 g/10 min, besonders bevorzugt 7 bis 15 g/10 min auf, gemessen bei 160°C und einer Belastung von 325 g nach EN ISO 1133. Ihre Säurezahl beträgt üblicherweise 100 bis 300 mg KOH/g Wachs, bevorzugt 115 bis 230 mg KOH/g Wachs, bestimmt nach DIN 53402.

In einer Ausführungsform der vorliegenden Erfindung weisen in den erfindungsgemäß verwendeten Dispersionen eingesetzte Ethylencopolymerwachse eine kinematische Schmelzeviskosität ν von mindestens 45.000 mm²/s auf, bevorzugt von mindestens 50.000 mm²/s.

In einer Ausführungsform der vorliegenden Erfindung liegen die Schmelzbereiche der in den in erfindungsgemäß verwendeten Dispersionen eingesetzte Ethylencopolymerwachse im Bereich von 60 bis 110°C, bevorzugt im Bereich von 65 bis 90°C, bestimmt durch DSC nach DIN 51007.

In einer Ausführungsform der vorliegenden Erfindung können die Schmelzbereiche von in erfindungsgemäß verwendeten Dispersionen eingesetztem Ethylencopolymerwachs breit sein und ein Temperaturintervall von mindestens 7 bis höchstens 20°C, bevorzugt mindestens 10°C und höchstens 15°C betreffen.

In einer Ausführungsform der vorliegenden Erfindung sind die Schmelzpunkte von in erfindungsgemäß verwendeten Dispersionen eingesetztem Ethylencopolymerwachs scharf und liegen in einem Temperaturintervall von weniger als 2°C, bevorzugt weniger als 1°C, bestimmt nach DIN 51007.

Die Dichte beträgt üblicherweise 0,89 bis 1,10 g/cm³, bevorzugt 0,92 bis 0,99 g/cm³, bestimmt nach DIN 53479.

In den erfindungsgemäß verwendeten Dispersionen eingesetzte Ethylencopolymerwachse können alternierende Copolymere sein oder Blockcopolymere oder vorzugsweise statistische Copolymere.

Ethylencopolymerwachse aus Ethylen und ethylenisch ungesättigten Carbonsäuren und gegebenenfalls ethylenisch ungesättigten Carbonsäureestern können vorteilhaft durch radikalisch initiierte Copolymerisation unter Hochdruckbedingungen hergestellt werden, beispielsweise in gerührten Hochdruckautoklaven oder in Hochdruckrohrreaktoren. Die Herstellung in gerührten Hochdruckautoklaven ist bevorzugt. Gerührte Hochdruckautoklaven sind an sich bekannt, eine Beschreibung findet man in *Ullmann's Encyclopedia of Industrial Chemistry,* 5. Auflage, Stichworte: Waxes, Bd. A 28, S. 146 ff., Verlag Chemie Weinheim, Basel, Cambridge, New York, Tokio, **1996**. Bei ihnen verhält sich überwiegend das Verhältnis Länge/Durchmesser in Intervallen von 5:1 bis 30:1, bevorzugt 10:1 bis 20:1. Die gleichfalls anwendbaren Hochdruckrohrreaktoren findet man ebenfalls in *Ullmann's Encyclopedia of Industrial Chemistry,* 5. Auflage, Stichworte: Waxes, Bd. A 28, S. 146 ff., Verlag Chemie Weinheim, Basel, Cambridge, New York, Tokio, **1996**.

Geeignete Druckbedingungen für die Polymerisation sind 500 bis 4000 bar, bevorzugt 1500 bis 2500 bar. Bedingungen dieser Art werden im Folgenden auch als Hochdruck bezeichnet. Die Reaktionstemperaturen liegen im Bereich von 170 bis 300°C, bevorzugt im Bereich von 195 bis 280°C.

Die Polymerisation kann man in Gegenwart eines Reglers durchführen. Als Regler verwendet man beispielsweise Wasserstoff oder mindestens einen aliphatischen Aldehyd oder mindestens ein aliphatisches Keton der allgemeinen Formel III 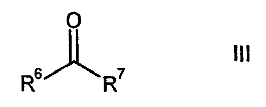 oder Mischungen derselben.

Dabei sind die Reste R⁶ und R⁷ gleich oder verschieden und ausgewählt aus
- Wasserstoff;
- C₁-C₆-Alkyl wie Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, besonders bevorzugt C₁-C₄-Alkyl wie Methyl, Ethyl, n-Propyl, iso-Propyl, n-Butyl, iso-Butyl, sec.-Butyl und tert.-Butyl;
- C₃-C₁₂-Cycloalkyl wie Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl.

In einer besonderen Ausführungsform sind die Reste R⁶ und R⁷ miteinander unter Bildung eines 4- bis 13-gliedrigen Rings kovalent verbunden. So können R⁶ und R⁷ beispielsweise gemeinsam sein: -(CH₂)₄-, -(CH₂)₅-, -(CH₂)₆, -(CH₂)₇-, -CH(CH₃)-CH₂-CH₂₋CH(CH₃)- oder -CH(CH₃)-CH₂-CH₂-CH₂-CH(CH₃)-.

Beispiele für geeignete Regler sind weiterhin alkylaromatische Verbindungen, beispielsweise Toluol, Ethylbenzol oder ein oder mehrere Isomere des Xylols. Beispiele für gut geeignete Regler sind weiterhin Paraffine wie beispielsweise Isododekan (2,2,4,6,6-Pentamethylheptan) oder Isooktan.

Als Starter für die radikalische Polymerisation können die üblichen Radikalstarter wie beispielsweise organische Peroxide, Sauerstoff oder Azoverbindungen eingesetzt werden. Auch Mischungen mehrerer Radikalstarter sind geeignet.

Geeignete Peroxide, ausgewählt aus kommerziell erhältlichen Substanzen, sind
- Didekanoylperoxid, 2,5-Dimethyl-2,5-di(2-ethylhexanoylperoxy)hexan, tert.-Amylperoxy-2-ethylhexanoat, Dibenzoylperoxid, tert.-Butylperoxy-2-ethylhexanoat, tert.-Butylperoxydiethylacetat, tert.-Butylperoxydiethylisobutyrat, 1,4-Di(tert.-butylperoxycarbo)-cyclohexan als lsomerengemisch, tert.-Butylperisononanoat 1,1-Di-(tert.-butylperoxy)-3,3,5-trimethylcyclohexan, 1,1-Di-(tert.-butylperoxy)-cyclohexan, Methyl-isobutylketonperoxid, tert.-Butylperoxyisopropylcarbonat, 2,2-Di-tert.-butylperox)butan oder tert.-Butylperoxacetat;
- tert.-Butylperoxybenzoat, Di-tert.-amylperoxid, Dicumylperoxid, die isomeren Di-(tert.-butylperoxyisopropyl)benzole, 2,5-Dimethyl-2,5-di-tert.-butylperoxyhexan, tert.-Butylcumylperoxid, 2,5-Dimethyl-2,5-di(tert.-butylperoxy)-hex-3-in, Di-tert.-butylperoxid, 1,3-Diisopropylmonohydroperoxid, Cumolhydroperoxid oder tert.-Butylhydroperoxid; oder
- dimere oder trimere Ketonperoxide der allgemeinen Formel IV a bis IV c.

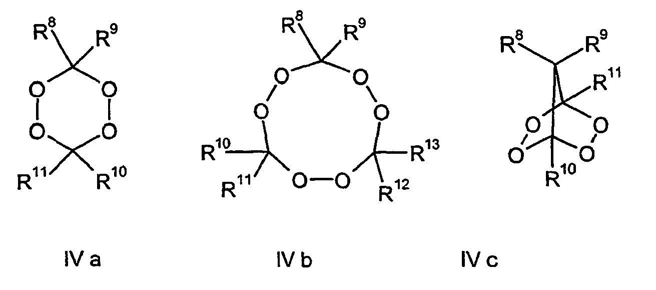

Dabei sind die Reste R⁸ bis R¹³ gleich oder verschieden und ausgewählt aus
- C₁-C₈-Alkyl wie Methyl, Ethyl, n-Propyl, iso-Propyl, n-Butyl, sec.-Butyl, iso-Butyl, tert.-Butyl, n-Pentyl, sec.-Pentyl, iso-Pentyl, n-Hexyl, n-Heptyl, n-Octyl; bevorzugt lineares C₁-C₆-Alkyl wie Methyl, Ethyl, n-Propyl, n-Butyl, n-Pentyl, n-Hexyl, besonders bevorzugt lineares C₁-C₄-Alkyl wie Methyl, Ethyl, n-Propyl oder n-Butyl, ganz besonders bevorzugt ist Methyl und Ethyl;
- C₆-C₁₄-Aryl wie Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

Peroxide der allgemeinen Formeln IV a bis IV c sowie Verfahren zu ihrer Herstellung sind aus EP-A 0 813 550 bekannt.

Als Peroxide sind Di-tert.-butylperoxid, tert.-Butylperoxypivalat, tert.-Butylperoxyisononanoat oder Dibenzoylperoxid oder Gemische derselben besonders geeignet. Als Azoverbindung sei Azobisisobutyronitril ("AIBN") beispielhaft genannt. Radikalstarter werden in für Polymerisationen üblichen Mengen dosiert.

Zahlreiche kommerziell erhältliche organische Peroxide werden mit sogenannten Phlegmatisierern versetzt, bevor sie verkauft werden, um sie besser handhabbar zu machen. Als Phlegmatisierer sind beispielsweise Weißöl oder Kohlenwasserstoffe wie insbesondere lsododekan geeignet. Unter den Bedingungen der Hochdruckpolymerisation können derartige Phlegmatisierer eine molekulargewichtsregelnde Wirkung haben. Im Sinne der vorliegenden Erfindung soll unter dem Einsatz von Molekulargewichtsreglern der zusätzliche Einsatz weiterer Molekulargewichtsregler über den Einsatz der Phlegmatisierer hinaus verstanden werden.

Das Mengenverhältnis der Comonomere bei der Dosierung entspricht üblicherweise nicht genau dem Verhältnis der Einheiten in den erfindungsgemäß verwendeten Ethylencopolymerwachsen, weil ethylenisch ungesättigte Carbonsäuren im Allgemeinen leichter in Ethylencopolymerwachse eingebaut werden als Ethylen.

Die Comonomere werden üblicherweise gemeinsam oder getrennt dosiert.

Die Comonomeren können in einem Kompressor auf den Polymerisationsdruck komprimiert werden. In einer anderen Ausführungsform des erfindungsgemäßen Verfahrens werden die Comonomeren zunächst mit Hilfe einer Pumpe auf einen erhöhten Druck von beispielsweise 150 bis 400 bar, bevorzugt 200 bis 300 bar und insbesondere 260 bar gebracht und danach mit einem Kompressor auf den eigentlichen Polymerisationsdruck.

Die Polymerisation kann wahlweise in Abwesenheit und in Anwesenheit von Lösemitteln durchgeführt werden, wobei Mineralöle, Weißöl und andere Lösungsmittel, die während der Polymerisation im Reaktor zugegen sind und zum Phlegmatisieren des oder der Radikalstarter verwendet wurden, im Sinne der vorliegenden Erfindung nicht als Lösemittel gelten. Geeignete Lösemittel sind beispielsweise Toluol, Isododekan, Isomere des Xylols.

Erfindungsgemäß verwendete Dispersionen enthalten vorzugsweise 1 bis 40 Gew.-%, bevorzugt 10 bis 35 Gew.-% ein oder mehrere Ethylencopolymerwachse.

Weiterhin enthalten die erfindungsgemäß verwendeten Dispersionen Wasser, das vorzugsweise deionisiert ist, d.h. durch Destillation oder mit Hilfe eines lonenaustauschers gereinigt wurde.

Erfindungsgemäß verwendete Dispersionen enthalten üblicherweise eine oder mehrere basisch wirkende Substanzen, mit denen das oder die Ethylencopolymerwachse zumindest partiell neutralisiert sind, beispielsweise Hydroxide und/oder Carbonate und/oder Hydrogencarbonate von Alkalimetallen, oder vorzugsweise Amine wie beispielsweise Ammoniak und organische Amine wie beispielsweise Alkylaminen, N-Alkylethanolaminen, Alkanolaminen und Polyaminen. Beispielhaft für Alkylamine seien genannt: Triethylamin, Diethylamin, Ethylamin, Trimethylamin, Dimethylamin, Methylamin. Bevorzugte Amine sind Monoalkanolamine, N,N-Dialkylalkanolamine, N-Alkylalkanolamine, Dialkanolamine, N-Alkylalkanolamine und Trialkanolamine mit jeweils 2 bis 18 C-Atomen im Hydroxyalkylrest und gegebenenfalls jeweils 1 bis 6 C-Atomen im Alkylrest, bevorzugt 2 bis 6 C-Atomen im Alkanolrest und gegebenenfalls 1 oder 2 C-Atomen im Alkylrest. Ganz besonders bevorzugt sind Ethanolamin, Diethanolamin, Triethanolamin, Methyldiethanolamin, n-Butyldiethanolamin, N,N-Dimethylethanolamin und 2-Amino-2-methylpropanol-1. Ganz besonders bevorzugt sind Ammoniak und N,N-Dimethylethanolamin. An Polyaminen seien beispielhaft genannt: Ethylendiamin, Tetramethylethylendiamin (TMEDA), Diethylentriamin, Triethylentetramin.

In einer Ausführungsform der vorliegenden Erfindung enthalten erfindungsgemäß verwendete Dispersionen so viel basisch wirkende Substanz bzw. basisch wirkende Substanzen, dass mindestens die Hälfte, bevorzugt mindestens 60 mol-% der Carboxylgruppen des oder der Ethylencopolymerwachse neutralisiert ist.

In einer Ausführungsform der vorliegenden Erfindung enthalten erfindungsgemäß verwendete Dispersionen so viel basisch wirkende Substanz bzw. basisch wirkende Substanzen und insbesondere Amin, dass die Carboxylgruppen des oder der Ethylencopolymerwachse quantitativ neutralisiert sind.

In einer Ausführungsform der vorliegenden Erfindung können erfindungsgemäß verwendete Dispersionen mehr basisch wirkende Substanz bzw. basisch wirkende Substanzen, insbesondere Amin, enthalten als zur vollständigen Neutralisation des oder der Ethylencopolymenrvachse erforderlich, beispielsweise einen Überschuss von bis zu 100 mol-%, bevorzugt bis zu 50 mol-%.

Erfindungsgemäß verwendete Dispersionen weisen üblicherweise einen basischen pH-Wert auf, bevorzugt pH-Werte von 7,5 bis 14, besonders bevorzugt von 8 bis 12 und ganz besonders bevorzugt von 8,5 bis 11,5.

Ein weiterer Gegenstand der vorliegenden Erfindung ist ein Verfahren zur Behandlung von Abwasser unter Verwendung einer oder mehrerer der oben beschriebenen wässrigen Dispersionen, im Folgenden auch als erfindungsgemäßes Behandlungsverfahren bezeichnet.

Die eingangs definierten Abwässer haben einen pH-Wert im Bereich von 1 bis 12. Besonders gut eignet sich das erfindungsgemäße Behandlungsverfahren zur Behandlung von Abwasser mit einem pH-Wert im Bereich von 4 bis 12, ganz besonders gut im Bereich von 5,5 bis 11.

Zur Durchführung des erfindungsgemäßen Behandlungsverfahren setzt man eine oder mehrere der oben beschriebenen Dispersionen dem zu behandelnden Abwasser zu. Vorzugsweise kann man 0,5 bis 2000 g, vorzugsweise 10 bis 1500 g einer oder mehrerer der oben beschriebenen wässrigen Dispersionen pro Kubikmeter Abwasser einsetzen, die beispielsweise bei der Vorklärung bei der Feststoffkoagulation, bei der Schlammeindickung, bei der Schlammentwässerung, bei der Nachklärung oder bei der Entphosphatierung dem Abwasser bzw. Abwasser enthaltenden sogenannten Schlämmen zugesetzt werden. Man kann die oben beschriebenen Dispersionen vor dem Einsatz auf eine Konzentration von 0,1 bis 0,3 Gew.-% Ethylencopolymerwachs verdünnen.

In einer Ausführungsform der vorliegenden Erfindung setzt man eine oder mehrere der oben beschriebenen Dispersionen zusammen mit üblichen Flockungsmitteln ein wie beispielsweise einem oder mehreren kationischen Polymeren, beispielsweise Polyvinylpyrrolidon oder Polyvinylimidazol oder Copolymeren aus Vinylimidazol und Vinylpyrrolidon.

In einer Ausführungsform der vorliegenden Erfindung trennt man nach der Zugabe von einer oder mehrerer der oben beschriebenen Dispersionen zu dem Abwasser sich absetzenden Feststoff vom überstehenden Wasser ab, beispielsweise indem man das Wasser durch einen Überlauf langsam ablaufen lässt. Diese Ausführungsform ist beispielsweise in der Vor- und in der Nachklärung bevorzugt.

In einer anderen Ausführungsform der vorliegenden Erfindung trennt man nach der Zugabe von einer oder mehrerer der oben beschriebenen Dispersionen zu dem Abwasser aufschwimmenden Feststoff vom Wasser ab, beispielsweise durch Flotation.

In einer anderen Ausführungsform der vorliegenden Erfindung trennt man nach der Zugabe von einer oder mehrerer der oben beschriebenen Dispersionen zu dem Abwasser sich absetzenden Feststoff vom überstehenden Wasser durch mechanische Methoden ab, beispielsweise durch Filtration mit z.B. Filtern oder Filterbändern oder Filterpressen wie z.B. Kammerfilterpressen, durch Zentrifugieren, durch dekantieren in z.bB. Dekantern oder durch Sieben. Diese Ausführungsform ist insbesondere bei Abwasserbehandlungsschritten bevorzugt, in den ein vergleichsweise hoher Gehalt an Trockensubstanz im zu behandelnden Abwasser vorliegt, beispielsweise bei Schlammentwässerung und bei Schlammeindickung.

Es wurde gefunden, dass Filter beim erfindungsgemäßen Behandlungsverfahren eine geringere Neigung zum Verschleimen haben.

Ein weiterer Gegenstand der vorliegenden Erfindung ist ein Verfahren zur Herstellung der erfindungsgemäß verwendeten wässrigen Dispersionen, im Folgenden auch als erfindungsgemäßes Dispergierverfahren bezeichnet. Das erfindungsgemäße Dispergierverfahren ist dadurch gekennzeichnet, dass man ein oder mehrere Ethylencopolymerwachse in Wasser in Gegenwart mindestens einer basisch wirkenden Substanz dispergiert.

Zur Durchführung des erfindungsgemäßen Dispergierverfahrens geht man von einem oder mehreren der oben beschriebenen Ethylencopolymerwachse aus. Dieses oder diese platziert man in einem Gefäß, beispielsweise einem Kolben, einem Autoklaven oder einem Kessel und erwärmt das oder die Ethylencopolymerwachse, Wasser und eine oder mehrere basisch wirkende Substanzen und gegebenenfalls weitere Bestandteile zu, wobei die Reihenfolge der Zugabe von Wasser und der Zugabe von basisch wirkender bzw. basisch wirkenden Substanzen sowie weiterer Bestandteile beliebig ist.

Wenn die Temperatur über 100°C liegt, ist es vorteilhaft, unter erhöhtem Druck zu arbeiten und das Gefäß entsprechend zu wählen. Man homogenisiert die entstehende Emulsion, beispielsweise durch mechanisches oder pneumatisches Rühren oder durch Schütteln. Man erwärmt vorteilhaft auf eine Temperatur über den Schmelzpunkt des oder der Ethylencopolymerwachse. Vorteilhaft erwärmt man auf eine Temperatur, die mindestens 10°C, besonders vorteilhaft auf eine Temperatur, die mindestens 30°C über dem Schmelzpunkt des oder der Ethylencopolymerwachse liegt.

Setzt man mehrere verschiedene Ethylencopolymerwachse ein, so erwärmt man auf eine Temperatur, die über dem Schmelzpunkt des bei der höchsten Temperatur schmelzenden Ethylencopolymerwachses liegt. Vorteilhaft erwärmt man in dem Fall, dass man mehrere verschiedene Ethylencopolymerwachse einsetzt, auf eine Temperatur, die mindestens 10°C über dem Schmelzpunkt des bei der höchsten Temperatur schmelzenden Ethylencopolymerwachses liegt. Besonders vorteilhaft erwärmt man in dem Fall, dass man mehrere verschiedene Ethylencopolymerwachse einsetzt, auf eine Temperatur, die mindestens 30°C über dem Schmelzpunkt des bei der höchsten Temperatur schmelzenden Ethylencopolymerwachses liegt.

Anschließend lässt man die so hergestellte wässrige Dispersion abkühlen.

Die nach dem erfindungsgemäßen Dispergierverfahren hergestellten wässrigen Dispersionen zeichnen sich durch gute Lagerstabilität aus und lassen sich gut im oben beschriebenen erfindungsgemäßen Behandlungsverfahren einsetzen.

Ein weiterer Aspekt der vorliegenden Erfindung sind wässrige Dispersionen, enthaltend mindestens ein zumindest partiell neutralisiertes Ethylencopolymerwachs, gewählt aus solchen Ethylencopolymerwachsen, die als Comonomere einpolymerisiert enthalten
(A) 26,1 bis 39 Gew.-%, bevorzugt 26,3 bis 35 Gew.-%, besonders bevorzugt 26,5 bis 38,9 Gew.-% mindestens einer ethylenisch ungesättigten Carbonsäure und
(B) 61 bis 73,9 Gew.-%, bevorzugt 65 bis 73,7, besonders bevorzugt 70 bis 73,5 Gew.-% Ethylen,
und solchen Ethylencopolymerwachsen, die einpolymerisiert enthalten
(A') 20,5 bis 38,9 Gew.-%, bevorzugt 21 bis 28 Gew.-% mindestens einer ethylenisch ungesättigten Carbonsäure,
(B') 60 bis 79,4 Gew.-%, bevorzugt 70 bis 78,5 Gew.-% Ethylen und
(C') 0,1 bis 15 Gew.-%, bevorzugt 0,5 bis 10 Gew.-% mindestens eines ethylenisch ungesättigten Carbonsäureesters.

Die in den erfindungsgemäßen Dispersionen enthaltenen Ethylencopolymerwachse sind oben stehend beschrieben.

Erfindungsgemäße wässrige Dispersionen eignen sich beispielsweise zur Durchführung des erfindungsgemäßen Behandlungsverfahrens.

Ein weiterer Aspekt der vorliegenden Erfindung sind Ethylencopolymerwachse, die als Comonomere einpolymerisiert enthalten
(A) 26,1 bis 39 Gew.-%, bevorzugt 26,3 bis 35 Gew.-%, besonders bevorzugt 26,5 bis 38,9 Gew.-% mindestens einer ethylenisch ungesättigten Carbonsäure und
(B) 61 bis 73,9 Gew.-% bevorzugt 65 bis 73,7, besonders bevorzugt 70 bis 73,5 Gew.-% Ethylen.

Ein weiterer Aspekt der vorliegenden Erfindung sind Ethylencopolymerwachse, die als Comonomere einpolymerisiert enthalten
(A') 20,5 bis 38,9 Gew.-%, bevorzugt 21 bis 28 Gew.-% mindestens einer ethylenisch ungesättigten Carbonsäure,
(B') 79,4 bis 60 Gew.-%, bevorzugt 70 bis 78,5 Gew.-% Ethylen und
(C') 0,1 bis 15 Gew.-%, bevorzugt 0,5 bis 10 Gew.-% mindestens eines ethylenisch ungesättigten Carbonsäureesters.

Die erfindungsgemäßen Ethylencopolymerwachse und ihre Herstellung sind oben stehend beschrieben.

Die Erfindung wird durch Arbeitsbeispiele erläutert.

### Arbeitsbeispiele

### 1. Herstellung von Ethylencopolymerwachs

In einem Hochdruckautoklaven, wie er in der Literatur beschrieben ist (M. Buback *et al., Chem. Ing. Tech.* **1994**, *66*, 510), wurden Ethylen und Methacrylsäure copolymerisiert. Dazu wurde Ethylen (12,0 kg/h) unter dem Reaktionsdruck von 1700 bar in den Hochdruckautoklaven kontinuierlich eingespeist. Zusätzlich wurde die in Tabelle 1 angegebene Menge Methacrylsäure zunächst auf einen Zwischendruck von 260 bar verdichtet und anschließend mit Hilfe eines weiteren Kompressors unter dem Reaktionsdruck von 1700 bar in den Hochdruckautoklaven kontinuierlich eingespeist. Zusätzlich wurde die in Tabelle 1 angegebene Menge Initiatorlösung, bestehend aus tert.-Butylperoxypivalat (in Isododekan, Konzentration siehe Tabelle 1), unter dem Reaktionsdruck von 1700 bar in den Hochdruckautoklaven kontinuierlich eingespeist. Getrennt davon wurde die in Tabelle 1 angegebene Menge Regler, bestehend aus Propionaldehyd in Isododekan, Konzentration siehe Tabelle 1, zunächst auf einen Zwischendruck von 260 bar verdichtet und anschließend mit Hilfe eines weiteren Kompressors unter dem Reaktionsdruck von 1700 bar in den Hochdruckautoklaven kontinuierlich eingespeist. Die Reaktionstemperatur betrug etwa 220°C. Man erhielt erfindungsgemäßes Ethylencopolymerwachs mit den aus Tabelle 2 ersichtlichen analytischen Daten.

**Tabelle 1 Herstellung erfindungsgemäßer Ethylencopolymerwachse**

| Nr. | T_{Reaktor} [°C] | Ethylen [kg/h] | MAS [I/h] | MAS [kg/h] | PA in ID [ml/h] | c(PA) | PO in ID [I/h] | c(PO) | Umsatz [Gew.-%] | Austrag ECW [kg/h] |
|---|---|---|---|---|---|---|---|---|---|---|
| 1 | 220 | 12 | 1,09 | 1,11 | 30 | 20 | 2,16 | 0,09 | 23 | 3,0 |
| 2 | 220 | 12 | 1,01 | 1,03 | 600 | 25 | 2,10 | 0,07 | 25 | 3,2 |
| 3 | 219 | 12 | 1,03 | 1,05 | - | - | 2,01 | 0,13 | 26 | 3,4 |
| 4 | 199 | 12 | 1,07 | 1,09 | - | - | 1,53 | 0,07 | 18 | 2,4 |
| 5 | 200 | 12 | 0,72 | 0,71 | - | - | 1,18 | 0,07 | 18 | 2,3 |
| V6 | 220 | 12 | 0,53 | 0,56 | - | - | 2,4 | 0,05 | 22 | 2,8 |

| | | | | | | | | | | |
|---|---|---|---|---|---|---|---|---|---|---|
| Unter T_{Reaktor} ist die maximale Innentemperatur des Hochdruckautoklaven zu verstehen. Abkürzungen: MAS: Methacrylsäure, PA: Propionaldehyd, ID: Isododekan (2,2,4,6,6-Pentamethylheptan), PA in ID: Lösung von Propionaldehyd in Isododekan, Gesamtvolumen der Lösung. PO: tert.-Butylperoxypivalat, ECW: Ethylencopolymerwachs c(PA): Konzentration von PA in ID in Volumenprozent, c(PO): Konzentration von PO in ID in mol/l | | | | | | | | | | |

Der Umsatz bezieht sich auf Ethylen und ist in Gew.-% angegeben

Das Ethylencopolymerwachs V6 ist ein Vergleichsbeispiel.

**Tabelle 2: Analytische Daten erfindungsgemäßer Ethylencopolymerwachse**

| Nr. | Gehalt Ethylen [Gew.-%] | Gehalt MAS [Gew.-%] | Säurezahl [mg KOH/g ECW] | ν [mm²/s] | Tₘₑₗₜ [°C] | ρ [g/cm³] |
|---|---|---|---|---|---|---|
| 1 | 71,9 | 28,1 | 183 | 50.000 | 65-80 | n.b. |
| 2 | 73,4 | 26,6 | 173 | 50.000 | 65-80 | n.b. |
| 3 | 73,6 | 26,4 | 172 | 68.000 | 70-80 | n.b. |
| 4 | 61,5 | 38,5 | 251 | 77.000 | 65-75 | 0,990 |
| 5 | 72,8 | 27,2 | 170 | n.b. | 79,3 | 0,961 |
| V6 | 84,7 | 15,3 | 100,5 | 70.000 | 65-80 | 0,953 |

| | | | | | | |
|---|---|---|---|---|---|---|
| Die MFR von Ethylencopolymerwachs 5 betrug 10,3 g/10 min, bestimmt bei einer Belastung von 325 g bei einer Temperatur von 160°C. n.b.: nicht bestimmt. Unter "Gehalt" ist der Anteil an einpolymerisiertem Ethylen bzw. MAS im jeweiligen Ethylencopolymerwachs zu verstehen. ν: dynamische Schmelzeviskosität, gemessen bei 120°C nach DIN 51562, | | | | | | |

Der Gehalt an Ethylen und Methacrylsäure in den erfindungsgemäßen Ethylencopolymerwachsen wurde NMR-spektroskopisch bzw. durch Titration (Säurezahl) bestimmt. Die Säurezahl des Ethylencopolymerwachses wurde titrimetrisch nach DIN 53402 bestimmt. Der KOH-Verbrauch korrespondiert mit dem Methacrylsäure-Gehalt im Ethylencopolymerwachs.

Die Dichte wurde bestimmt nach DIN 53479. Der Schmelzbereich wurde bestimmt durch DSC (Differential scanning calorimetry, Differentialthermoanalyse) nach DIN 51007 bestimmt.

### 1. Herstellung erfindungsgemäßer Dispersionen und Vergleichsversuch

In einem 2-Liter-Autoklaven mit Ankerrührer wurde die in Tabelle 3 angegebene Menge Ethylencopolymerwachs nach Beispiel 1 vorgelegt. Es wurden die in Tabelle 3 angegebenen Mengen deionisiertes Wasser sowie das in Tabelle 3 angegebene Amin zugesetzt und unter Rühren auf 120°C erhitzt. Nach 15 Minuten bei 120° wurde innerhalb von 15 Minuten auf Zimmertemperatur abgekühlt. Man erhielt die erfindungsgemäßen Dispersionen D1 und D2 und die Vergleichsdispersion D3-V und D4-V.

**Tabelle 3: Herstellung von Dispersionen**

| Nr. | ECW Nr. | Menge ECW [g] | Amin | Menge Amin [g] | Menge Wasser [g] |
|---|---|---|---|---|---|
| D1 | 5 | 25,0 | NH₃ | 3,4 | 71,6 |
| D2 | 5 | 20,7 | (CH₃)₂NCH₂CH₂OH | 3,5 | 75,8 |
| D3-V | V6 | 25,0 | NH₃ | 3,4 | 71,6 |
| D4-V | V6 | 20,7 | (CH₃)₂NCH₂CH₂OH | 3,5 | 75,8 |

| | | | | | |
|---|---|---|---|---|---|
| Die "Menge NH₃" bezieht sich auf die Menge an 25 Gew.-% wässriger Ammoniaklösung. | | | | | |

### 2. Behandlung von Abwasser: Schlammentwässerung

Es wurde nach der in DE 28 37 017 offenbarten Testmethode verfahren.

### Allgemeine Vorschrift:

Die Untersuchungen wurden an einem Vorklärschlamm durchgeführt, der in der Vorklärstufe einer Kläranlage eines chemischen Unternehmens durch Sedimentation erhalten worden war. Der Schlamm besaß einen Feststoffgehalt von 2 Gew.-%. Der Anteil an organischen Bestandteilen der Schlammfeststoffe betrug 53 Gew.-%.

500 ml einer Schlammprobe wurden in ein 1-1-Becherglas gegeben und unter Rühren mit einer Rührerdrehzahl von 50 U/min gerührt. Anschließend wurden 2 ml der jeweils zu untersuchenden Dispersion innerhalb von 5 Sekunden schnell zugegeben. Danach wurde noch 2 Minuten gerührt und die Schlammprobe auf eine Glasfiltemutsche (Durchmesser: 12 cm) mit eingelegtem Polypropylenleinen (Durchmesser. 11 cm) überführt. Das ablaufende Filtrat wurde mit Hilfe eines Messzylinders aufgefangen und die ablaufende Menge Filtrat pro Zeiteinheit notiert.

**Tabelle 4: Schlammentwässerung**

| Nr. Dispersion | ECW Nr. | Abgelaufenes Filtrat [ml] nach | | | | | | Bemerkung |
|---|---|---|---|---|---|---|---|---|
| | | 15 sec. | 30 sec. | 45 sec. | 60 sec. | 90 sec. | 120 sec. | |
| / | / | 45 | 70 | 90 | 100 | 130 | 150 | Filtrat trübe |
| D4-V | V6 | 60 | 90 | 115 | 130 | 150 | 170 | Filtrat klar |
| D2 | 5 | 115 | 165 | 210 | 245 | 300 | 340 | Filtrat klar |

| | | | | | | | | |
|---|---|---|---|---|---|---|---|---|
| sec.: Sekunden | | | | | | | | |

Die Versuche wurden wiederholt, jedoch wurde nach 2 Minuten der Rührer abgeschaltet und auf eine Filtration verzichtet. Nach 5 Minuten wurde der Klarheit des Überstandes mit Hilfe eines Spektralphotometers L5500 nach Dr. Lange gemessen.

Man erhielt folgende Extinktionen:

| | |
|---|---|
| Trinkwasser | 0,000 |
| Behandlung mit D4-V | 0,660 |
| Behandlung mit D1 | 0,500 |
| Behandlung mit D2 | 0,450 |

## Patentansprüche

1. Verwendung von wässrigen Dispersionen, enthaltend mindestens ein zumindest partiell neutralisiertes Ethylencopolymerwachs, gewählt aus solchen Ethylencopolymerwachsen, die als Comonomere einpolymerisiert enthalten
(A) 26,1 bis 39 Gew.-% mindestens einer ethylenisch ungesättigten Carbonsäure und
(B) 61 bis 73,9 Gew.-% Ethylen,
und solchen Ethylencopolymerwachsen, die einpolymerisiert enthalten
(A') 20,5 bis 38,9 Gew.-% mindestens einer ethylenisch ungesättigten Carbonsäure,
(B') 60 bis 79,4 Gew.-% Ethylen und
(C') 0,1 bis 15 Gew.-% mindestens eines ethylenisch ungesättigten Carbonsäureesters,
als Hilfsmittel für die Abwasseraufbereitung.

2. Verwendung nach Anspruch 1, **dadurch gekennzeichnet, dass** mindestens eine ethylenisch ungesättigte Carbonsäure (A) bzw. (A') die allgemeine Formel I hat, 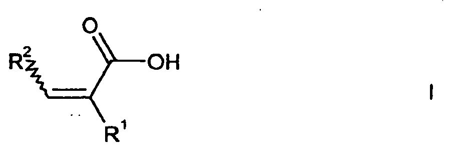 wobei die Reste wie folgt definiert sind:
R¹ gewählt aus Wasserstoff, unverzweigtem oder verzweigtem C₁-C₁₀-Alkyl,
R² gewählt aus Wasserstoff, unverzweigtem oder verzweigtem C₁-C₁₀-Alkyl.

3. Verwendung nach Anspruch 1 oder 2, **dadurch gekennzeichnet, dass** mindestens ein ethylenisch ungesättigter Carbonsäureester die allgemeine Formel II hat, 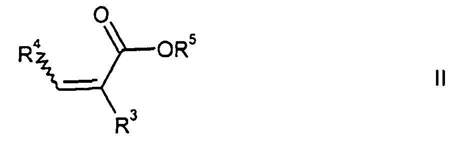 wobei die Reste wie folgt definiert sind:
R³ gewählt aus Wasserstoff, unverzweigtem oder verzweigtem C₁-C₁₀-Alkyl,
R⁴ gewählt aus Wasserstoff, unverzweigtem oder verzweigtem C₁-C₁₀-Alkyl.
R⁵ gewählt aus unverzweigtem oder verzweigtem C₁-C₁₀-Alkyl oder C₃-C₁₂₋Cycloalkyl.

4. Verwendung nach einem der Ansprüche 1 bis 3, **dadurch gekennzeichnet, dass** R¹ Wasserstoff oder Methyl bedeutet.

5. Verwendung nach einem der Ansprüche 1 bis 4, **dadurch gekennzeichnet, dass** R² Wasserstoff bedeutet.

6. Verwendung nach einem der Ansprüche 1 bis 5, **dadurch gekennzeichnet, dass** R³ Wasserstoff oder Methyl bedeutet.

7. Verwendung nach einem der Ansprüche 1 bis 6, **dadurch gekennzeichnet, dass** R⁴ Wasserstoff bedeutet.

8. Verwendung nach einem der Ansprüche 1 bis 7, **dadurch gekennzeichnet, dass** das oder die Ethylencopolymerwachse mit basischer Alkalimetallverbindung oder mindestens einem Amin zumindest partiell neutralisiert sind.

9. Verwendung nach einem der Ansprüche 1 bis 8, **dadurch gekennzeichnet, dass** das oder die Ethylencopolymerwachsen mit Amin zumindest partiell neutralisiert sind, wobei mindestens ein Amin gewählt wird aus Ammoniak, N-Alkylethanolaminen, Alkanolaminen und Polyaminen.

10. Verfahren zur Behandlung von Abwasser, **dadurch gekennzeichnet, dass** man Abwasser mit einer oder mehreren Dispersionen nach einem der Ansprüche 1 bis 9 behandelt.

11. Verfahren nach Anspruch 10, **dadurch gekennzeichnet, dass** man nach der Behandlung des Abwassers mit einer oder mehreren wässrigen Dispersionen sich absetzende oder aufschwimmende Feststoff abtrennt.

12. Verfahren zur Herstellung von wässrigen Dispersionen nach einem der Ansprüche 1 bis 9, **dadurch gekennzeichnet, dass** man ein oder mehrere Ethylencopolymerwachse in Wasser in Gegenwart mindestens einer basischen Substanz dispergiert.

13. Wässrige Dispersionen, enthaltend mindestens ein zumindest partiell neutralisiertes Ethylencopolymerwachs, gewählt aus solchen Ethylencopolymerwachsen, die als Comonomere einpolymerisiert enthalten
(A) 26,1 bis 39 Gew.-% mindestens einer ethylenisch ungesättigten Carbonsäure und
(B) 61 bis 73,9 Gew.-% Ethylen,
und solchen Ethylencopolymerwachsen, die einpolymerisiert enthalten
(A') 20,5 bis 38,9 Gew.-% mindestens einer ethylenisch ungesättigten Carbonsäure,
(B') 60 bis 79,4 Gew.-% Ethylen und
(C') 0,1 bis 15 Gew.-% mindestens eines ethylenisch ungesättigten Carbonsäureesters.

14. Ethylencopolymerwachse, die als Comonomere einpolymerisiert enthalten
(A) 26,1 bis 39 Gew.-% mindestens einer ethylenisch ungesättigten Carbonsäure und
(B) 61 bis 73,9 Gew.-% Ethylen.

15. Ethylencopolymerwachse, die als Comonomere einpolymerisiert enthalten
(A') 20,5 bis 38,9 Gew.-% mindestens einer ethylenisch ungesättigten Carbonsäure,
(B') 79,4 bis 60 Gew.-% Ethylen und
(C') 0,1 bis 15 Gew.-% mindestens eines ethylenisch ungesättigten Carbonsäureesters.

## Claims

1. The use of aqueous dispersions comprising at least one at least partially neutralized ethylene copolymer wax selected from among ethylene copolymer waxes which comprise, as comonomers in copolymerized form,
(A) from 26.1 to 39% by weight of at least one ethylenically unsaturated carboxylic acid and
(B) from 61 to 73.9% by weight of ethylene,
and ethylene copolymer waxes which comprise, in copolymerized form,
(A') from 20.5 to 38.9% by weight of at least one ethylenically unsaturated carboxylic acid,
(B') from 60 to 79.4% by weight of ethylene and
(C') from 0.1 to 15% by weight of at least one ethylenically unsaturated carboxylic ester,
as auxiliaries for wastewater treatment.

2. The use according to claim 1, wherein at least one ethylenically unsaturated carboxylic acid (A) or (A') has the formula I, 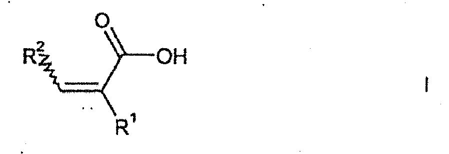 where the radicals are defined as follows:
R¹ is selected from among hydrogen and unbranched or branched C₁-C₁₀-alkyl,
R² is selected from among hydrogen and unbranched or branched C₁-C₁₀-alkyl.

3. The use according to claim 1 or 2, wherein at least one ethylenically unsaturated carboxylic ester has the formula II, 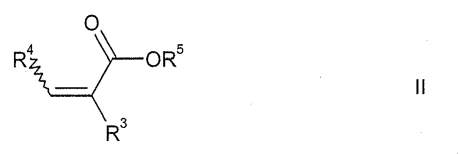 where the radicals are defined as follows:
R³ is selected from among hydrogen and unbranched or branched C₁-C₁₀-alkyl,
R⁴ is selected from among hydrogen and unbranched or branched C₁-C₁₀-alkyl.
R⁵ is selected from among unbranched or branched C₁-C₁₀-alkyl and C₃-C₁₂-cycloalkyl.

4. The use according to any of claims 1 to 3, wherein R¹ is hydrogen or methyl.

5. The use according to any of claims 1 to 4, wherein R² is hydrogen.

6. The use according to any of claims 1 to 5, wherein R³ is hydrogen or methyl.

7. The use according to any of claims 1 to 6, wherein R⁴ is hydrogen.

8. The use according to any of claims 1 to 7, wherein the ethylene copolymer wax or waxes have been at least partially neutralized by means of a basic alkali metal compound or at least one amine.

9. The use according to any of claims 1 to 8, wherein the ethylene copolymer wax or waxes have been at least partially neutralized by amine, where at least one amine is selected from among ammonia, N-alkylethanolamines, alkanolamines and polyamines.

10. A process for the treatment of wastewater, which comprises treating wastewater with one or more dispersions according to any of claims 1 to 9.

11. The process according to claim 10, wherein solids which settle or float are separated off after the treatment of the wastewater with one or more aqueous dispersions.

12. The process for preparing aqueous dispersions according to any of claims 1 to 9, which comprises dispersing one or more ethylene copolymer waxes in water in the presence of at least one basic substance.

13. An aqueous dispersion comprising at least one at least partially neutralized ethylene copolymer wax selected from among ethylene copolymer waxes which comprise, as comonomers in copolymerized form,
(A) from 26.1 to 39% by weight of at least one ethylenically unsaturated carboxylic acid and
(B) from 61 to 73.9% by weight of ethylene,
and ethylene copolymer waxes which comprise, in copolymerized form,
(A') from 20.5 to 38.9% by weight of at least one ethylenically unsaturated carboxylic acid,
(B') from 60 to 79.4% by weight of ethylene and
(C') from 0.1 to 15% by weight of at least one ethylenically unsaturated carboxylic ester.

14. An ethylene copolymer wax comprising, as comonomers in copolymerized form,
(A) from 26.1 to 39% by weight of at least one ethylenically unsaturated carboxylic acid and
(B) from 61 to 73.9% by weight of ethylene.

15. An ethylene copolymer wax comprising, as comonomers in copolymerized form,
(A') from 20.5 to 38.9% by weight of at least one ethylenically unsaturated carboxylic acid,
(B') from 79.4 to 60% by weight of ethylene and
(C') from 0.1 to 15% by weight of at least one ethylenically unsaturated carboxylic ester.

## Revendications

1. Utilisation de dispersions aqueuses contenant une cire de copolymère d'éthylène au moins partiellement neutralisée, choisie parmi des cires de copolymères d'éthylène qui, comme comonomères, contiennent à l'état copolymérisé
(A) 26,1 à 39 % en poids d'au moins un acide carboxylique éthyléniquement insaturé, et
(B) 61 à 73,9 % en poids d'éthylène,
et des cires de copolymères d'éthylène qui contiennent à l'état copolymérisé
(A') 20,5 à 38,9 % en poids d'au moins un acide carboxylique éthyléniquement insaturé,
(B') 60 à 79,4 % en poids d'éthylène, et
(C') 0,1 à 15 % en poids d'au moins un ester d'acide carboxylique éthyléniquement insaturé,
comme adjuvants pour le traitement d'eaux résiduaires.

2. Utilisation suivant la revendication 1, **caractérisée en ce qu'**au moins un acide carboxylique éthyléniquement insaturé (A) ou respectivement (A') présente la formule générale I : 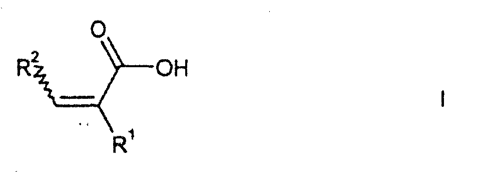 où les radicaux sont définis de la manière suivante :
R¹ est choisi parmi de l'hydrogène et un groupe alkyle en C₁-C₁₀ non ramifié ou ramifié,
R² est choisi parmi de l'hydrogène et un groupe alkyle en C₁-C₁₀ non ramifié ou ramifié.

3. Utilisation suivant la revendication 1 ou 2, **caractérisée en ce qu'**au moins un ester d'acide carboxylique éthyléniquement insaturé présente la formule générale II : 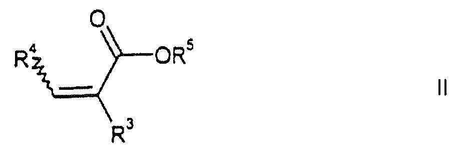 où les radicaux sont définis de la manière suivante :
R³ est choisi parmi de l'hydrogène et un groupe alkyle en C₁-C₁₀ non ramifié ou ramifié,
R⁴ est choisi parmi de l'hydrogène et un groupe alkyle en C₁-C₁₀ non ramifié ou ramifié,
R⁵ est choisi parmi un groupe alkyle en C₁-C₁₀ non ramifié ou ramifié ou un groupe cycloalkyle en C₃-C₁₂.

4. Utilisation suivant l'une des revendications 1 à 3, **caractérisée en ce que** R¹ représente de l'hydrogène ou du méthyle.

5. Utilisation suivant l'une des revendications 1 à 4, **caractérisée en ce que** R² représente de l'hydrogène.

6. Utilisation suivant l'une des revendications 1 à 5, **caractérisée en ce que** R³ représente de l'hydrogène ou du méthyle.

7. Utilisation suivant l'une des revendications 1 à 6, **caractérisée en ce que** R⁴ représente de l'hydrogène.

8. Utilisation suivant l'une des revendications 1 à 7, **caractérisée en ce que** la ou les cires de copolymère d'éthylène sont au moins partiellement neutralisées avec un composé basique de métal alcalin ou au moins une amine.

9. Utilisation suivant l'une des revendications 1 à 8, **caractérisée en ce que** la ou les cires de copolymère d'éthylène sont au moins partiellement neutralisées avec de l'amine, au moins une amine étant choisie parmi de l'ammoniac, des N-alkyléthanolamines, des alcanolamines et des polyamines.

10. Procédé de traitement d'eau résiduaire, **caractérisé en ce qu'**on traite l'eau résiduaire avec une ou plusieurs dispersions suivant l'une des revendications 1 à 9.

11. Procédé suivant la revendication 10, **caractérisé en ce que**, après le traitement de l'eau résiduaire par une ou plusieurs dispersions aqueuses, on isole de la matière solide qui se dépose ou qui surnage.

12. Procédé de préparation de dispersions aqueuses suivant l'une des revendications 1 à 9, **caractérisé en ce qu'**on disperse une ou plusieurs cires de copolymère d'éthylène dans de l'eau en présence d'au moins une substance basique.

13. Dispersions aqueuses contenant au moins une cire de copolymère d'éthylène au moins partiellement neutralisée, choisie parmi des cires de copolymère d'éthylène qui, comme comonomères, contiennent à l'état copolymérisé
(A) 26,1 à 39 % en poids d'au moins un acide carboxylique éthyléniquement insaturé, et
(B) 61 à 73,9 % en poids d'éthylène,
et des cires de copolymères d'éthylène qui contiennent à l'état copolymérisé
(A') 20,5 à 38,9 % en poids d'au moins un acide carboxylique éthyléniquement insaturé,
(B') 60 à 79,4 % en poids d'éthylène, et
(C') 0,1 à 15 % en poids d'au moins un ester d'acide carboxylique éthyléniquement insaturé.

14. Cires de copolymère d'éthylène qui, comme comonomères, contiennent à l'état copolymérisé
(A) 26,1 à 39 % en poids d'au moins un acide carboxylique éthyléniquement insaturé, et
(B) 61 à 73,9 % en poids d'éthylène.

15. Cires de copolymère d'éthylène qui, comme comonomères, contiennent à l'état copolymérisé
(A') 20,5 à 38,9 % en poids d'au moins un acide carboxylique éthyléniquement insaturé,
(B') 79,4 à 60 % en poids d'éthylène, et
(C') 0,1 à 15 % en poids d'au moins un ester d'acide carboxylique éthyléniquement insaturé.
